# EUROPEAN PATENT SPECIFICATION

(11) **EP 1 281 128 B1**
(45) Date of publication and mention of the grant of the patent: **07.08.2013**
(21) Application number: 01916975.4
(22) Date of filing: 02.02.2001
(51) Int. Cl.: G06F 15/02, G06F 17/30

(54) **MOBILE PERSONAL DIGITAL ASSISTANT**
PORTABLER PERSÖHNLICHER DIGITALER ASSISTENT (PDA)
ASSISTANT NUMERIQUE PERSONNEL MOBILE

(30) Priority: 03.02.2000 GB 0002515
(43) Date of publication of application: 05.02.2003
(73) Proprietor: Motorola Limited, Basingstoke, Hampshire RG22 4PD (GB)
(72) Inventor: JOHN, Laurence, Nicholas, East Molsey Surrey KT8 9BP (GB)
(74) Representative: Cross, Rupert Edward Blount
(86) International application number: PCT/EP2001/001273
(87) International publication number: WO 2001/057690

(56) References cited:
- WO-A-99/12104
- US-A- 6 014 090
- HELLAKER J ET AL: "Real-time traveller information - in everyone's pocket? - a pilot test using hand-portable GSM terminals" VEHICLE NAVIGATION AND INFORMATION SYSTEMS CONFERENCE, 1993., PROCEEDINGS OF THE IEEE-IEE OTTAWA, ONT., CANADA 12-15 OCT. 1993, NEW YORK, NY, USA,IEEE, 12 October 1993 (1993-10-12), pages 49-52, XP010219744 ISBN: 0-7803-1235-X

## Description

### Field of the Invention

This invention relates to a mobile personal digital assistant.

### Background to the Invention

There are many circumstances where a person who is mobile requires information. If that person is equipped with a mobile station forming part of a telephone system for example, then he may be able to obtain some information by directly dialling suitable persons, agencies, etc to obtain information from them. Examples of such mobile stations are mobile and portable telephones. In order to be able to do this however, the user needs to know the correct person, agency, database, etc, to call in order to find that information. Even if he knows the correct source, he may not immediately have contact details to hand (e.g. telephone numbers).

In its broadest scope, the mobile station may be a mobile telephone, portable computer, or a personal digital assistant with a built-in or external telephone link.

There may also be occasions when the information relates, for example, to a piece of music heard on a radio broadcast, information presented on a TV channel the user is watching, information related to a particular location the user is in, and so on. There is presently no easy way of finding this type of information, other than by making notes at the time and then conducting some laborious research later on.

US patent no. 6,014,090 describes a method for providing time-dependent, geographically localised information to a mobile communication system. A geographic location identifier associated with a location of the mobile communication system is received. An address of a resource server which stores time-dependent, geographically localised information, is associated with the geographic location identifier and is sent to the mobile communication system. The mobile communication system can then retrieve time-dependent, geographically localised information from the resource server associated with the geographic location.

The present invention arose in an attempt to provide an improved way of obtaining information.

### Summary of the Invention

According to the present invention there is provided a personal digital assistant system, as recited in claim 1 of the accompanying claims.

According to a second embodiment of the invention, there is provided a personal digital assistant system, as recited in claim 2 of the accompanying claims.

The data recording means may comprise, or be part of, a computer file, such as a web page.

The identifying mark may preferably be a time stamp which is assigned to the recorded data, a marker indicative of the cell in which the mobile station was located at the time the data is recorded (and thereby its location at that time), or other means.

The recorded data may be, for example, a voice tag; identification details of a media source; a book title; an artists' name; the title of a composition or piece of music; a word, expression or phrase about which the user requires information, explanation or translation; or a predetermined code word relating to the type of information required.

The means for retrieving information may be an Internet based search tool such as a web browser or a search engine.

According to the present invention in a further aspect, there is provided a method of retrieving information as recited in claim 13 of the accompanying claims.

### Brief Description of the Drawings

Embodiments of the invention will now be described, by way of example only, with reference to the accompanying schematic drawings in which:
Figure 1 shows a mobile station linked to a computer;
Figure 2 shows an embodiment of the present invention; and
Figure 3 shows an alternative mobile station.

### Detailed Description of Preferred Embodiments of the Invention

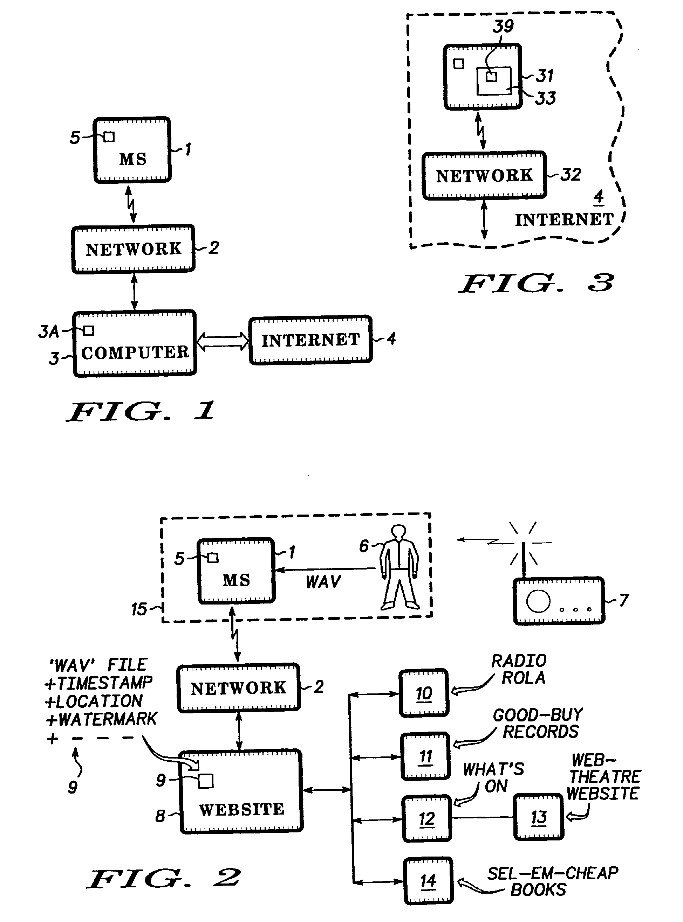

Referring to Figure 1, the user of a system according to the invention is provided with a mobile station, which in the embodiment shown is a portable telephone 1 connected by a radio link to a cellular network 2. Network 2 may be a GSM network, for example. In other embodiments, the mobile station may be a portable radio connected to a base station, or any other type of mobile station which can transmit messages. A computer 3 forms a part of, or is connected to, the network, so that messages from the mobile station can be relayed via the network to the computer, where they can be stored in a web page 3a, or other file, associated with the user. The computer 3 and/or the web page is connected to external data sources which may typically be located on the Internet 4, and will usually be connected thereto via an Internet service provider (not shown), in the normal manner.

In general terms, when a user requires a certain piece of information, he presses a specific button 5 provided on the mobile station, or enters data in some other way, such as by a voice message, which sends an appropriate message, via network 2, to the web site 3a. This causes a 'mobile bookmark' to be set up on the personalised web site 3a. Depending upon the nature of the information required, the computer can then be arranged to search for relevant information from external sources. It may use pre-defined links, search engines and various other search tools which are available to find the required information, for example, on the Internet. The information is then returned to the 'home' computer, and is then available for the user to view or to act upon when required.

Alternatively, the mobile bookmark may simply be recorded upon the web site for subsequent viewing so that the user, when subsequently viewing the bookmark, can then decide whether and possibly how to search for the further information. When the user subsequently views the bookmark, he can drag and drop it around the Internet, or other medium, in order to collect information relating to the bookmark.

A more specific example is shown with reference to Figure 2. This example relates to a song broadcast by a radio station.

Referring to Figure 2, a radio station, 'Radio Rola', broadcasts a particular song at a certain time and this is heard by a user 6 listening to a radio set 7. The user has not heard the music before and finds it interesting. He wants to know more about it. Accordingly, the user instigates an information finding process using his mobile telephone 1. He may, however, not know the title or artist of the song, but may have details of the radio station which is broadcasting the song. Accordingly, the user may enter a voice message such as "Radio Rola" into the mobile station, possibly also depressing a specialised 'bookmarking' button 5. Instead of depressing the button, a code word instigating the information-location process may be spoken, such as "info" before the message "Radio Rola". The mobile station sends an appropriate signal to the user's web site 8, via the network 2. In order to do this, clearly the network has to be provided with sufficient data to identify the web site and to be able to enter information on to it. Methods for doing this are well known.

In the case described above, the information recorded is a spoken file in the form of a 'WAV' file, which can be applied to a voice analyser for detecting the message therein. However, in addition to or instead of this basic information, other information may be added. In the particular example of a song played on the radio, a time stamp is an essential piece of information if the user does not know the song but knows the radio station.

The message may additionally, or alternatively, be provided with data showing the location of the user. This may be obtained from the knowledge of the particular cell 15 in which the mobile station was located when the user commenced the process. The cell information is known to the network and can be added to the message. The message may also be watermarked, which can provide an indication of the mobile station used, the manufacturer thereof, and other information which can be useful. This is described later. The message may also be tagged with additional data such as user ID, user profile, the presence of an identifying token such as a Subscriber Identification Module (SIM) or Smart Card in the telephone, a voice tag, or other data. The resulting bookmark 9 is stored on the website.

The bookmark 9 may be catalogued, or archived. It may be sent back to the originating mobile station, or sent on to another mobile station or other terminal determined by the user. This allows it, or its content, to be viewed and/or listened to by the user.

At the web site, the WAV file and other data are analysed. Assume that the user has bookmarked a radio station, Radio Rola, and a time stamp is included. As a first step, the system locates Radio Rola's web site 10 and interrogates this to determine what song was being played at the time indicated by the time stamp. Assuming that the radio station provides a time-indexed playlist which can be accessed via its web site, then information relating to the song, such as title and artist, can be relayed back to the bookmark 9 created on web site 8. Armed with this information, the 'personal digital assistant' can then attempt to find out more detail about the song and artist. It may for example link to one or more on-line vendors such as a music vendor 'Good Buy Records' 11 to obtain quotes to buy that particular song on CD, tape or other media. Links may also be made to other relevant sites, such as the 'What's On' site 12, with a view to finding whether that artist is appearing in any concerts in the future. If so, then a further link may be made to a particular theatre web site 13 with a view to obtaining details of pricing and availability of tickets, and possibly even to buy tickets. Access may also be made to book sellers such as 'Sell-Them-Cheap-Books' 14 to obtain books or articles relevant to that artist or song.

Many other links and types of information pertinent to the original information, e.g. the song played on the radio station, will be envisaged. In principle, the whole Internet and other external sources of data and information are available for interrogation and information retrieval, or for purchasing various items.

The mobile bookmark can, while mobile, have a particular voice tag added to it such as "Book Review" or "Music" or "TV Channel XYZ" to provide further identifying markers to the recorded data. Alternatively, the mobile bookmarks may have menus or icons tagged.

As discussed, in a simple form, the information may simply sit as a mobile bookmark at a personal web site, waiting for the user to decide what action to take. Accordingly, in the music example given, the user has made a note that he is interested in that particular song and now has the facility to find out more about it.

Over a period, a user may create a large number of mobile bookmarks. When the user next views his web site, the mobile bookmarks may be listed and displayed with voice tags if appropriate. These can be played as sound files, such as WAV files. If there is a voice tag, then the system has an ability to recognise a voice tag and to add the off-line information as described above, e.g. by interacting with the various web sites 10 to 14. If a voice tag, for example, has the term "Book Review" in it, then an automatic link (i.e. a hyperlink) to a relevant book seller "Sell-Them-Cheap-Books" 14 can be added offline.

The mobile bookmarks may be watermarked with attributes such as the manufacturer of the mobile station (telephone) 1. If a mobile bookmark is subsequently acted upon and a transaction occurs, e.g. a CD is bought for a particular song, then the CD seller may be provided with the ability to inform the mobile telephone manufacturer that he obtained a sale. The retailer may possibly pay a fee. Alternatively, if the book seller 14 for example makes a sale, then the fact that the original inspiration for the user to buy that came from a song broadcast on a particular radio station, can be used to enable that radio station to obtain a payment from the book seller as a 'referral' fee. This may be known as an input stimulus.

The watermark can be used for 'profiling' a user. That is, when a digital bookmark is dragged or linked to a site, its watermark can indicate to the owner of that site that the originator of the bookmark is interested in that owner's products or services, or particular ones or types of his products or services. Thus, a profile of the bookmark user can be established.

When watermarks are used, bookmarks can be dragged and dropped around the worldwide web, and pick up various attributes along the way. For example, the user may not even know the name of the radio station he was listening to, but merely know that he liked a piece of music that was played at a particular time. This time is determined by the time stamp which forms part of the mobile bookmark. The bookmark can be dragged across a selection of web sites of radio stations and obtain details from each of them about whatever music or song they were playing at that particular time. From the resulting information, a user can judge what the music was he was interested to purchase. Say, for example, that this is a Beethoven CD. The user then marks the Beethoven link and this attribute is then added to the mobile bookmark. The mobile bookmark can then be dragged and dropped to a book seller to obtain books on Beethoven, and may also be linked to a What's On Guide, etc.

In a further example, a user may be looking to purchase a new property. On his travels, he sees a property, which may or may not be listed as for sale. The user then activates a suitable mobile bookmark, e.g. by the words "House for Sale". Since the system is aware of the cell 15 in which the user's mobile station 1 is located at any time, location details may be added to the bookmark. The system can then search for the web sites of local estate agents or other organisations that may be selling houses in that location, and can hopefully find details of the particular property the person is interested in. Links can also be made to local schools, shops, amenities, and so on, in order to give the user a good idea of the environment in which the property is located.

Push technology may be used to add further attributes to the mobile bookmarking system. So, if the system knows that the user has previously shown an interest in Beethoven for example, when the user is in the vicinity of a particular theatre, information relevant to an upcoming Beethoven concert may be pushed automatically to that user's web site. The user can then be prompted with an offer for a ticket, for example.

Another example of a use of the present invention is when a user encounters a word or expression he is not familiar with. This might for example be a technical phrase, or a word or phrase in a foreign language. By entering (speaking or typing, for example) this word into the system, a link to a suitable site, such as a dictionary or translation engine, can be made. This returns the meaning, translation or spelling of the word or expression.

It is likely that in the future a mobile station will incorporate a computer capable of hosting a web-site. In these circumstances, the mobile bookmark will be stored at the mobile station itself. The mobile station will then source the relevant information directly, via the network which will be part of the Internet, for example. Figure 3 shows a mobile station 31, incorporating a computer 33, which hosts the mobile bookmark 39. The mobile station communicates via a network 32, and in effect forms part of the Internet 4.

## Claims

1. A personal digital assistant system, having a data recording means (8);
means for receiving, via a radio link between the data recording means and a mobile station, voice data input by a user of the mobile station after initiating an information finding process at the mobile station;
means (1) for assigning an identifying marker to the voice data, the identifying marker including a marker indicative of the location of the mobile station; and
means, associated with the data recording means (8), for retrieving information relevant to the identifying marker and the voice data from external data sources (10-14), the system being **characterized by**:
the identifying marker and the voice data are stored as a digital bookmark (9) associated with the mobile station or the user of the mobile station in the data recording means (8), and
the digital bookmark (9) is subsequently accessible by the mobile station or the user of the mobile station.

2. A personal digital assistant system, comprising:
a mobile station (1), including a data recording means (33);
means for providing voice data input by a user of the mobile station in response to the user of the mobile station initiating an information finding process;
means (1) for assigning an identifying marker to the voice data, the identifying marker including a marker indicative of the location of the mobile station; and
means, associated with the data recording means, for retrieving information relevant to the identifying marker and the voice data from external data sources (10-14) via a radio link, the system being **characterized by**:
the identifying marker and the voice data are stored as a digital bookmark (39) associated with the mobile station or the user of the mobile station in the data recording means (33), and
the digital bookmark (9) is subsequently accessible by the mobile station or the user of the mobile station.

3. A personal digital assistant system as claimed in claim 1 or 2, wherein the data recording means (8) is a web page or web site.

4. A personal digital assistant system as claimed in any preceding claim, wherein the identifying marker further includes any one or more of a timestamp, a marker identifying the type of voice data recorded, or information to be retrieved.

5. A personal digital assistant system as claimed in any preceding claim, wherein the mobile station is a cellular radio or telephone and the identifying marker provides an indication of the cell (15) in which the mobile station is located at the time of voice data transfer.

6. A personal digital assistant system as claimed in any preceding claim, wherein the identifying marker includes information about the user of the mobile station, or the mobile station itself.

7. A personal digital assistant system as claimed in any preceding claim, wherein the digital bookmark (9) comprises one or more of:
a voice tag;
identification details of a media source;
a book title;
an artists' name;
the title of a composition or piece of music;
a word, expression or phrase about which the user requires information, explanation or translation; or
a predetermined code word relating to the type of information required.

8. A personal digital assistant system as claimed in claim 7, wherein the digital bookmark (9) includes identification details of a media source, for example a radio station or a television channel.

9. A personal digital assistant system as claimed in any preceding claim, wherein the identifying marker includes a watermark identifying any one or more of the users; information regarding the mobile station; or information regarding the network the user subscribes to.

10. A personal digital assistant system as claimed in claim 9, wherein an external data source is a web page (10) or other computerised file.

11. A personal digital assistant system as claimed in any preceding claim, wherein the identifying marker is a watermark and wherein the watermark comprises means facilitating payment compensation to be made between organisations or individuals for use, actions and/or transactions deriving from use of the digital bookmark.

12. A personal digital assistant as claimed in claim 11, wherein the watermark enables user profiling.

13. A method of retrieving information, comprising inputting voice data at a mobile station (1) in response to an user of the mobile station initiating an information finding process, assigning an identifying marker to the voice data, the identifying marker including a marker indicative of the location of the mobile station, storing the voice data and identifying marker as a digital bookmark (9) associated with the mobile station or the user of the mobile station in data recording means (8) for subsequent access by the mobile station or the user of the mobile station, and retrieving information relevant to the digital bookmark from external data sources (10-14).

14. A method as claimed in claim 13, including the step of storing the digital bookmark (9) at a data recording means remote from the mobile station.

## Patentansprüche

1. Persönliches digitales Assistentensystem, das folgendes aufweist:
ein Datenaufzeichnungsmittel (8);
Mittel zum Empfang, über eine Funkverbindung zwischen dem Datenaufzeichnungsmittel und einer Mobilstation, von Sprachdateneingabe durch einen Anwender der Mobilstation nach dem Einleiten eines Informationssuchverfahrens an der Mobilstation;
Mittel (1) zum Zuordnen eines Identifikationsmarkers zu den Sprachdaten, wobei der Identifikationsmarker einen Marker aufweist, der auf die Position der Mobilstation hindeutet; und
Mittel, zugehörig zu dem Datenaufzeichnungsmittel (8), zum Abfragen von Informationen, die relevant für den Identifikationsmarker und die Sprachdaten von externen Datenquellen (10-14) sind, wobei das System **dadurch gekennzeichnet ist, dass**:
der Identifikationsmarker und die Sprachdaten als digitales Lesezeichen (9) zugehörig zu der Mobilstation oder dem Anwender der Mobilstation in dem Datenaufzeichnungsmittel (8) gespeichert sind, und
das digitale Lesezeichen (9) anschließend für die Mobilstation oder den Anwender der Mobilstation zugänglich ist.

2. Persönliches digitales Assistentensystem, das folgendes aufweist:
eine Mobilstation (1), mit einem Datenaufzeichnungsmittel (33);
Mittel zur Bereitstellung von Sprachdateneingabe durch einen Anwender der Mobilstation, ansprechend darauf, dass der Anwender der Mobilstation ein Informationssuchverfahren einleitet;
Mittel (1) zum Zuordnen eines Ideritifikationsmarkers zu den Sprachdaten, wobei der Identifikationsmarker einen Marker aufweist, der auf die Position der Mobilstation hindeutet; und
Mittel, zugehörig zu dem Datenaufzeichnungsmittel, zum Abfragen von Informationen, die relevant für den Identifikationsmarker und die Sprachdaten von externen Datenquellen (10-14) sind, über eine Funkverbindung, wobei das System **dadurch gekennzeichnet ist, dass**:
der Identifikationsmarker und die Sprachdaten als digitales Lesezeichen (39) zugehörig zu der Mobilstation oder dem Anwender der Mobilstation in dem Datenaufzeichnungsmittel (33) gespeichert sind, und
das digitale Lesezeichen (9) anschließend für die Mobilstation oder den Anwender der Mobilstation zugänglich ist.

3. Persönliches digitales Assistentensystem nach Anspruch 1 oder 2, wobei das Datenaufzeichnungsmittel (8) eine Webseite oder eine Webpräsenz ist.

4. Persönliches digitales Assistentensystem nach einem der vorergehenden Ansprüche, wobei der Identifikationsmarker des Weiteren ein beliebiges oder mehrere der folgenden aufweist: einen Zeitstempel, einen Marker, der die Art der aufgezeichneten Sprachdaten identifiziert, oder abzufragende Informationen.

5. Persönliches digitales Assistentensystem nach einem der vorhergehenden Ansprüche, wobei die Mobilstation ein Mobilfunk oder -telefon ist und der Identifikationsmarker einen Hinweis auf die Zelle (15) bereitstellt, in der die Mobilstation zum Zeitpunkt der Sprachdatenübertragung positioniert ist.

6. Persönliches digitales Assistentensystem nach einem der vorhergehenden Ansprüche, wobei der Identifikationsmarker Informationen über den Anwender der Mobilstation oder die Mobilstation selbst aufweist.

7. Persönliches digitales Assistentensystem nach einem der vorhergehenden Ansprüche, wobei das digitale Lesezeichen (9) eines oder mehrere der folgenden aufweist:
ein Voice-Tag;
Identifikationsangaben einer Medienquelle;
einen Buchtitel;
den Namen eines Künstlers;
den Titel einer Komposition oder eines Musikstücks;
ein Wort, eine Redensart oder eine Phrase, zu welchem/r der Anwender Informationen, eine Erklärung oder Übersetzung benötigt; oder
ein vorgegebenes Codewort, das mit der Art der benötigten Informationen in Zusammenhang steht.

8. Persönliches digitales Assistentensystem nach Anspruch 7, wobei das digitale Lesezeichen (9) Identifikationsangaben einer Medienquelle aufweist, beispielsweise eines Radiosenders oder eines Fernsehkanals.

9. Persönliches digitales Assistentensystem nach einem der vorhergehenden Ansprüche, wobei der Identifikationsmarker ein Wasserzeichen aufweist, das einen beliebigen oder mehrere der Anwender identifiziert; Informationen bezüglich der Mobilstation; oder Informationen bezüglich des Netzwerks, bei dem der Anwender angemeldet ist.

10. Persönliches digitales Assistentensystem nach Anspruch 9, wobei eine externe Datenquelle eine Webseite (10) oder andere computergestütze Datei ist.

11. Persönliches digitales Assistentensystem nach einem der vorhergehenden Ansprüche, wobei der Identifikationsmarker ein Wasserzeichen ist und wobei das Wasserzeichen ein Mittel aufweist, das Ausgleichszahlungen ermöglicht, die zwischen Organisationen oder Individuen für die Verwendung, Aktionen und/oder Transaktionen, abgeleitet von der Verwendung des digitalen Lesezeichens, geleistet werden sollen.

12. Persönliches digitales Assistentensystem nach Anspruch 11, wobei das Wasserzeichen Anwenderprofilierung ermöglicht.

13. Verfahren zum Abfragen von Informationen, das eine Eingabe von Sprachdaten an einer Mobilstation (1) aufweist, ansprechend darauf, dass ein Anwender der Mobilstation ein Informationssuchverfahren einleitet, ein Zuordnen eines Identifikationsmarkers zu den Sprachdaten, wobei der Identifikationsmarker einen Marker aufweist, der auf die Position der Mobilstation hindeutet, ein Speichern der Sprachdaten und des Identifikationsmarkers als digitales Lesezeichen (9) zugehörig zu der Mobilstation oder dem Anwender der Mobilstation in Datenaufzeichnungsmittel (8), für anschließenden Zugang für die Mobilstation oder den Anwender der Mobilstation, und Abfragen von Informationen, die für das digitale Lesezeichen von externen Datenquellen (10-14) relevant sind.

14. Verfahren nach Anspruch 13, das den Schritt des Speicherns des digitalen Lesezeichens (9) an einem Datenaufzeichnungsmittel aufweist, das von der Mobilstation entfernt ist.

## Revendications

1. Système d'assistant numérique personnel, comportant
un moyen d'enregistrement de données (8) ;
un moyen pour recevoir, via une liaison radio entre le moyen d'enregistrement de données et une station mobile, des données vocales entrées par un utilisateur de la station mobile après l'initiation d'un processus d'établissement d'informations à la station mobile ;
un moyen (1) pour attribuer un marqueur d'identification aux données vocales, le marqueur d'identification incluant un marqueur indicatif de l'emplacement de la station mobile ; et
un moyen, associé au moyen d'enregistrement de données (8), pour extraire des informations se rapportant au marqueur d'indentification et les données vocales de sources de données externes (10-14), le système étant **caractérisé par** :
le marqueur d'identification et les données vocales sont stockés comme un marque-page numérique (9) associé à la station mobile ou à l'utilisateur de la station mobile dans le moyen d'enregistrement de données (8), et
le marque-page numérique (9) est ensuite accessible par la station mobile ou par l'utilisateur de la station mobile.

2. Système d'assistant numérique personnel, comprenant :
une station mobile (1), incluant un moyen d'enregistrement de données (33) ;
un moyen pour fournir des données vocales entrées par un utilisateur de la station mobile en réponse à l'utilisateur de la station mobile initiant un processus d'établissement d'informations ;
un moyen (1) pour attribuer un marqueur d'identification aux données vocales, le marqueur d'identification incluant un marqueur indicatif de l'emplacement de la station mobile ; et
un moyen, associé au moyen d'enregistrement de données, pour extraire des informations se rapportant au marqueur d'identification et les données vocales de sources de données externes (10è14) via une liaison radio, le système étant **caractérisé par** :
le marqueur d'identification et les données vocales sont stockés comme un marque-page numérique (39) associé à la station mobile ou à l'utilisateur de la station mobile dans le moyen d'enregistrement de données (33), et
le marque-page numérique (9) est ensuite accessible par la station mobile ou par l'utilisateur de la station mobile.

3. Système d'assistant numérique personnel selon la revendication 1 ou 2, dans lequel le moyen d'enregistrement de données (8) est une page web ou un site web.

4. Système d'assistant numérique personnel selon l'une quelconque des revendications précédentes, dans lequel le marqueur d'identification comprend en outre un ou plusieurs d'un horodatage, d'un marqueur identifiant le type de données vocales enregistrées ou des informations à extraire.

5. Système d'assistant numérique personnel selon l'une quelconque des revendications précédentes, dans lequel la station mobile est un radio ou téléphone cellulaire, et le marqueur d'identification fournit une indication de la cellule (15) dans laquelle la station mobile est localisée au moment du transfert des données vocales.

6. Système d'assistant numérique personnel selon l'une quelconque des revendications précédentes, dans lequel le marqueur d'identification inclut des informations se rapportant à l'utilisateur de la station mobile ou à la station mobile elle-même.

7. Système d'assistant numérique personnel selon l'une quelconque des revendications précédentes, dans lequel le marque-page numérique (9) comprend un ou plusieurs de :
une balise vocale ;
des détails d'identification d'une source de media ;
un titre de livre ;
un nom d'artiste ;
le titre d'une composition ou pièce de musique ;
un mot, expression ou phase pour lequel l'utilisateur requiert des informations, explications ou traductions ; ou
un mot de code prédéterminé se rapportant au type d'information requise.

8. Système d'assistant numérique personnel selon la revendication 7, dans lequel le marque-page numérique (9) comprend des détails d'identification d'une source de media, par exemple d'une station de radio ou d'un canal de télévision.

9. Système d'assistant numérique personnel selon l'une quelconque des revendications précédentes, dans lequel le marqueur d'identification comprend un filigrane identifiant un quelconque ou plusieurs des utilisateurs ; des informations se rapportant à la station mobile ; ou des informations se rapportant au réseau de souscription de l'utilisateur.

10. Système d'assistant numérique personnel selon la revendication 9, dans lequel une source de données externe est une page web (10) ou autre fichier informatisé.

11. Système d'assistant numérique personnel selon l'une quelconque des revendications précédentes, dans lequel le marqueur d'identification est un filigrane, et où le filigrane comprend des moyens facilitant l'exécution d'une compensation de paiement entre des organisations ou des individus pour l'utilisation, des actions et/ou transactions résultant de l'utilisation du marque-page numérique.

12. Assistant numérique personnel selon la revendication 11, dans lequel le filigrane permet le profilage des utilisateurs.

13. Procédé pour extraire des informations, comprenant l'entrée de données vocales à une station mobile (1) en réponse à l'initiation, par un utilisateur de la station mobile, d'un processus d'établissement d'informations, l'attribution d'un marqueur d'identification aux données vocales, le marqueur d'identification incluant un marqueur indicatif de la localisation de la station mobile, le stockage des données vocales et l'identification du marqueur comme un marque-page numérique (9) associé à la station mobile ou à l'utilisateur de la station mobile dans un moyen d'enregistrement de données (8) pour l'accès suivant par la station mobile ou par l'utilisateur de la station mobile, et l'extraction d'informations se rapportant au marque-page numérique de sources de données externes (10-14).

14. Procédé selon la revendication 13, incluant l'étape consistant à stocker le marque-page numérique (9) à un moyen d'enregistrement de données éloigné de la station mobile.
